# EUROPEAN PATENT APPLICATION

(11) **EP 3 029 310 A2**
(43) Date of publication of application: **08.06.2016**
(21) Application number: 15275242.4
(22) Date of filing: 01.12.2015
(51) Int. Cl.: F03B 1/00, F03B 13/10, F03B 17/02

(54) **ELECTRICITY GENERATOR**

(30) Priority: 05.12.2014 GB 201421712
(71) Applicant: Aguiar, Tolentino, London SE29 3QY (GB)
(72) Inventor: Aguiar, Tolentino, London SE29 3QY (GB)
(74) Representative: Williams Powell

(57) **Abstract**

Disclosed is an electricity generator, including a housing (12) for positioning underwater within a body of water. The housing (12) encloses a chamber in a watertight manner and includes a first aperture (20) for receiving an incoming jet of water due to a pressure of water outside the housing (12) and a second aperture (22) for coupling to a pump for removing water from the chamber. The generator includes at least one turbine aligned with the first aperture (20) to be turned by a jet of water through the first aperture (20). The generator is configured to generate electricity from the turning of the at least one turbine.

## Description

The present invention relates to electricity generators and methods of operating electricity generators.

There are many types of electricity generators in existence. Hydroelectric power stations are one example.

The present invention seeks to provide an improved electricity generator.

According to an aspect of the invention, there is provided an electricity generator, including:
a housing for positioning underwater within a body of water, the housing enclosing a chamber in a watertight manner and including a first aperture for receiving an incoming jet of water due to a pressure of water outside the housing and a second aperture for coupling to a pump for removing water from the chamber; and
at least one turbine aligned with the first aperture to be turned by a jet of water through the first aperture;
wherein the generator is configured to generate electricity from the turning of the at least one turbine.

Embodiments of the invention are for being located entirely underwater in a large body of water. Preferred embodiments are able to generate electricity in a clean and efficient manner with minimal environmental impact.

The at least one turbine is preferably a plurality of turbines, which in preferred embodiments can maximise the energy extracted from the water.

Preferably, the chamber is ellipsoidal.

The generator can include a third aperture for coupling to an air conduit for introducing air into the chamber to replace water and/or air pumped out of the chamber via the second aperture and/or for allowing air to leave the chamber, and can include an air conduit coupled to the third aperture, the air conduit being for extending to and being in fluid communication with air, for example for extending to land.

The generator can include at least one pump coupled to the second aperture for pumping water out of the second aperture for example via a conduit.

The at least one pump can be configured to pump water from the chamber to land.

The at least one pump can be configured to maintain a pressure in the chamber of no more than 2 atmospheres, preferably of substantially 1 atmosphere, or in some embodiments 1 atmosphere or less.

In embodiments, the housing is for positioning at a depth of at least 400m or preferably at least 500m underwater.

According to an aspect of the invention, there is provided a method of operating an electricity generator, the generator including:
a housing positioned underwater within a body of water, the housing enclosing a chamber in a watertight manner and including a first aperture for receiving an incoming jet of water due to a pressure of water outside the housing and a second aperture coupled to at least one pump for removing water from the chamber; and
at least one turbine aligned with the first aperture to be turned by an incoming jet of water through the first aperture; the method including:
   allowing water to enter the chamber via the first aperture to turn the at least one turbine and thereby to generate electricity.

The method can include:
allowing water to enter the chamber via the first aperture to turn the at least one turbine and thereby to generate electricity during a first time period; and
pumping water out of the chamber with the at least one pump during a second time period. In some embodiments, the at least one pump can be inactive during the first time period, and/or water can be prevented from entering the chamber during the second time period, for example by closing the first aperture.

The method can include operating a second electricity generator, the second generator including:
a housing positioned in a body of water, the housing enclosing a chamber in a watertight manner and including a first aperture for receiving an incoming jet of water due to a pressure of water outside the housing and a second aperture coupled to at least one pump for removing water from the chamber; and
at least one turbine aligned with the first aperture to be turned by an incoming jet of water through the first aperture; the method including in a first time period:
   allowing water to enter the chamber of the first generator via the respective first aperture to turn the respective at least one turbine and thereby to generate electricity; and
   pumping water out of the chamber of the second generator with the respective at least one pump; and in a second time period:
      allowing water to enter the chamber of the second generator via the respective first aperture to turn the respective at least one turbine and thereby to generate electricity; and
      pumping water out of the chamber of the first generator with the respective at least one pump.

In some embodiments, in the first time period, the at least one pump of the first generator can be inactive and/or water can be prevented from entering the chamber of the second generator, for example by closing the first aperture of the second generator. In some embodiments, in the second time period, the at least one pump of the second generator can be inactive and/or water can be prevented from entering the chamber of the first generator, for example by closing the first aperture of the first generator.

According to an aspect of the invention, there is provided a computer program for performing the above method when executed on a computing device, for example a computing device coupled to the electricity generator so as to control it.

According to an aspect of the invention, there is provided an electricity generator, including:
a housing including a first aperture for receiving an incoming jet of water;
a plurality of turbines aligned with the first aperture to be turned by an incoming jet of water through the first aperture; and
wherein the generator is configured to generate electricity from the turning of the at least one turbine. In embodiments this can be without action on the water between the turbines.

Some embodiments are based on having two buildings on the seabed (which can be built in sections to make it easier for construction). Such embodiments provide an air pocket /tank on each of the buildings, which up above have turbines in line (the immense gravity will allow to have turbines in line reduced in diameter to minimise the water intake) which power the generator. There can be a huge filter to prevent fish from getting in the system and valves to shut off periods. Such embodiments can also have at the higher level a breather channelled to shore above the sea level. On the lower level of the tank such embodiments can have a series of pumps, which pump water to shore. These pumps, pump water simultaneously as water intake. The pumps can consume electric energy produced on the upper level or energy produced on the other building or electricity produced by others. Each of these pumps can have its own drainage pipe. When water reaches certain levels, production can gradually switch off to the other building then when it reaches the empty levels it can switch back again gradually to the same building, and vice versa. When not self sustained such embodiments can empty its tanks with brought in energy. From land there can be a tunnel for access and maintenance. Components such as resistors can be fitted once that part of the building is water tight.

Embodiments of the invention can produce electrical energy on the seabed.

Embodiments of the invention can store energy for use in high demand periods.

Embodiments of the invention provide electrical energy production/storage.

Preferred embodiments utilise high pressure/gravity force present in deep water to produce more electricity than many current known methods, and/or enable the storage of energy for conversion into electrical energy on demand.

Many previous hydroelectric power stations have water barriers, which can have a significant environmental impact and in some countries are difficult to construct. Preferred embodiments of the invention do not provide a significant adverse environmental impact. Furthermore, preferred embodiments have reduced oil and gas consumption than many known methods of generating electricity.

Preferred embodiments are more efficient than many known methods of electricity generation using raised water gravity tanks.

A preferred embodiment of the invention is described below, by way of example only, with reference to the accompanying drawings, in which:
Figure 1 is a schematic cross sectional view of an electricity generator according to an embodiment of the invention;
Figure 2 is a schematic cross-sectional diagram of the embodiment of Figure 1 showing its set up with respect to the sea and a control station on land.

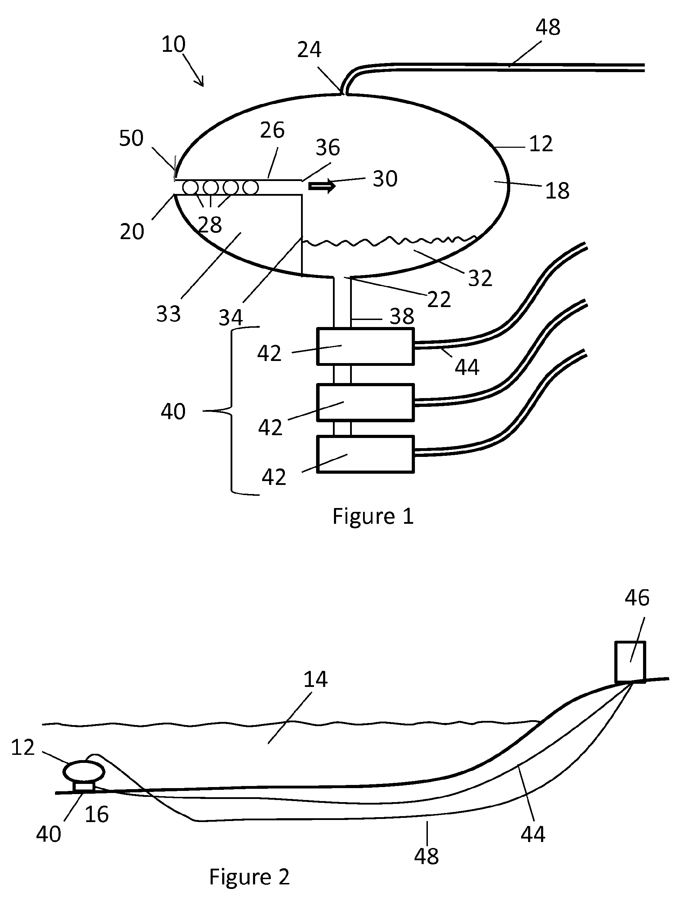

An electricity generator 10 includes a housing 12 for being positioned underwater within a body of water 14. An exemplary positioning of the housing 12 within the body of water 14 is shown in Figure 2. The body of water 14 can be any large body of water. It can, for example be a lake. However, preferably it is a sea or ocean.

The housing 12 is typically positioned at the bottom of the body of water 14, for example on the sea bed 16. Nevertheless, it does not need to be at the bottom of the body of water 14 in all embodiments. However, it is preferably at least 500 metres below the surface of the water.

As can be seen from the figures, the housing 12 is ellipsoidal in order to resist the pressures of water at the great depth at which it is located. However, in other embodiments, other shapes can be used in accordance with the skilled person's knowledge of shapes and configurations used in marine technology to withstand sea pressures.

The housing 12 is substantially hollow and encloses a chamber 18. The housing 12 is configured to enclose the chamber 18 in a watertight or sealed manner with the exception of a first aperture 20, a second aperture 22 and a third aperture 24 which are provided in the housing 12. The first, second and third apertures are typically substantially circular, but can in other embodiments be other shapes in accordance with the skilled person's knowledge of suitable shapes for marine technology.

The first aperture 20 is an opening to the direct exterior of the housing 12, in other words to the body of water 14, to allow water to enter the chamber 18. The first aperture can be provided with a filter to prevent fish, debris or other unwanted objects from entering the generator.

Coupled to an inside of the first aperture 20 and leading to the interior of the chamber 18 is a conduit 26. The conduit 26 is sealingly coupled to the first aperture so that all water entering via the first aperture passes into the conduit 26. The conduit 26 may for example be a rigid cylindrical tube.

In this embodiment, the chamber 18 has a dimension perpendicular to an axis of the first aperture at least twice, preferably at least 5 times, the diameter of the first aperture.

In this embodiment, the axis of the first aperture is substantially horizontal, but in other embodiments the first aperture can be placed at different points on the housing to provide the axis of the first aperture at different orientations.

The conduit 26 includes a plurality of turbines 28, each of the turbines being configured to be turned by moving water passing through the conduit 26 and to generate electricity therefrom. Each of the turbines is substantially inside the conduit 26, or at least a part of each turbine configured to receive the moving water is inside the conduit 26. However, it is not excluded that other components of or connected with the turbines are outside the conduit 26.

The turbines 28 are aligned with the first aperture 20. As can be seen from Figure 1, the turbines 28 are held in a straight line by the conduit 26. Although it is not necessary in all embodiments for the turbines 28 to be in a straight line, the turbines are all aligned with the first aperture 20 so that water entering the housing 12 through the first aperture 20 as a result of the high pressure of the water outside the housing 12 is guided past each of the turbines 28 in order to turn the turbines 28 and thereby generate electricity.

The specific configuration of the turbines 28 and the mechanism for generating electricity is well within the abilities of the skilled person.

In the embodiment depicted in Figure 1, there are shown four turbines 28. However, there can be any number of turbines 28. Preferably, there is more than one turbine 28 as in general each subsequent turbine in a line away from the first aperture 20 can generate additional electricity from the water as there will have been an incomplete conversion of energy in the water to electrical energy by the previous turbines. Therefore, up to a point at which no more energy can be extracted from the water, the more turbines there are, the more energy is gathered from the water entering via the first aperture 20. However, each additional turbine away from the first aperture generates less electricity than the turbine before it. Accordingly, for each embodiment of the invention, the skilled person is able to select a number of turbines 28 that will optimally balance energy converted against expense (in cost and resources) of the turbines.

The conduit 26 is configured to direct water that has entered via the first aperture 20 and past the turbines 28 in the direction of arrow 30 into the interior of the chamber 18 where water can gather at a base 32 of the chamber. The conduit includes an end 36 of the conduit 26 which is distal with respect to the first aperture 20 and which opens into the interior of the chamber 18 to direct water into the interior of the chamber. The length of the conduit is typically less than half of the length of the chamber 18. The end 36 is typically less than half way between the first aperture 20 and a wall of the housing opposite the first aperture, thereby ensuring that there is a large amount of space for water to be directed into.

The conduit can be positioned on a horizontal shelf 33 which extends from the first aperture and supports the full length of the conduit 26. The shelf can extend across the width of the chamber 18, the width being the horizontal dimension perpendicular to the axis of the first aperture. The shelf can include a wall 34 extending from the distal edge of the shelf to a base of the chamber and across the width of the chamber, wherein distal is with respect to the first aperture. The shelf thereby seals off the section of the chamber below the conduit 26 in order to prevent water from accumulating below the conduit 26.

Although in this embodiment the shelf is flat and the conduit is straight and its full length is supported by the shelf, in some embodiments the shelf supports only a part of the length of the conduit and/or the shelf is not flat whereby to support bends in the conduit. In some embodiments, the shelf is not horizontal but at an angle to the horizontal.

A second conduit 38 is sealingly coupled to the second aperture 22 externally to the housing to ensure that all water passing through the second aperture passes into the second conduit. The second conduit 38 couples the second aperture 22 to a pump system 40 including at least one pump 42.

Although Figure 1 shows three pumps 42 in the pump system 40, in different embodiments there are different numbers of pumps. In some embodiments, there is only one pump. Additional pumps can mean that the pump system 40 is more effective at pumping water out of the chamber 18. However, it can in some cases make the pump system 40 less efficient in terms of energy used for a given volume of water pumped. Accordingly, the skilled person will for each embodiment determine the appropriate number of pumps 42 in order to provide the optimal balance of effectiveness against efficiency.

Each of the pumps 42 is coupled to a respective drain conduit 44, such as a water pipe, although it is not excluded that in some embodiments the pumps can all be coupled to a common drain conduit.

The pumps 42 are configured to pump water out of the chamber 18 and into the drain conduits 44. Although not necessary in every embodiment, the drain conduits 44 are coupled between the pump system 40 and a control station 46, which as can be seen in Figure 2 is on land. As can be seen in Figure 2, the drain conduits 44 are coupled through the seabed 16 to the control station 46. However, in other embodiments, the drain conduits 44 can be coupled through the sea rather than through the seabed. The pump system 40 is thus configured to pump water from the chamber 18 to land. Preferably, for pumping efficiency, the pump system is configured to pump water to a location higher than the surface of the body of water, for example a location above sea level.

Each of the pumps is in signal communication with the control station 46, typically via a cable (not shown) which can follow the route of the drain conduits. Each of the pumps is therefore remotely operable by the control station.

The third aperture 24 is sealingly coupled externally to the housing to an air conduit 48, such as an airtight pipe. The air conduit 48 is in fluid communication with atmospheric air in order to maintain a pressure in the chamber 18 in the region of 1 atmosphere.

As shown in Figure 2, the air conduit 48 is coupled through the seabed 16 to the control station 46, where it is in fluid communication with atmospheric air.

However, in other embodiments, the air conduit 48 can be coupled through the sea rather than through the seabed. In other embodiments, the air conduit can be coupled to air above the surface of the sea 14 rather than to a control station 46.

There is also a power cable (not shown) running along a similar path to the drain conduit 44 and/or the air conduit 48 to convey electrical power generated by the turbines 28 to the control station 46.

In some embodiments, the first aperture 20 includes a closure member 50 which can be operated to selectively open or close the first aperture 20. The closure member 50 is shown in Figure 1 but is not necessary in every embodiment as described below. The closure member can be coupled to and controlled by the control station 46, for example by a signal control line running along a similar path to the drain conduit 44 and/or the air conduit 48. The control station can use the signal control line to move the closure member 50 between an open and closed configuration thereby to selectively open and/or close the first aperture 20.

The electricity generator 10 can be used in various modes of operation including continuous operation, offset operation, and battery operation.

### Continuous Operation

In continuous operation mode, there does not need to be a closure member 50. If a closure member 50 is provided, it is always configured to maintain the first aperture 20 in the open configuration.

Owing to the pressure difference between high pressure water on the outside of the housing 12 and relatively lower pressure air in the chamber 18, water is forced down the pressure gradient through the first aperture 20 and along the conduit 26 in the direction of arrow 30. As water is forced along the conduit 26, it turns the turbines 28, thereby generating electricity. This electricity is conveyed by the power line to the control station 46.

Water exiting the end 36 of the conduit 26 falls into the base 32 of the chamber 18.

As water enters the chamber, the chamber slowly begins to fill up.

Simultaneously with the entry of the water via the first aperture 20, pump system 40 is operated so that the pumps 42 pump the water which has accumulated in the chamber 18 out of the second aperture 22 via the second conduit 38 and out of the generator via the drain conduits 44.

The inventor has determined that the amount of electrical energy generated by the plurality of turbines 28 can be substantially more than the amount of energy required to pump water out of the chamber by the pump system 40. Accordingly, the pumps 42 can be powered by electricity generated by the turbines 28 while there is still substantially more additional electrical power generated by the turbines which can be provided to the control station 46 by the power line. However, in other embodiments, the pumps 42 can be powered from a power supply on land, for example by being coupled to receive power from the control station 46, allowing all the electrical power generated by the turbines to be transferred to the control station 46.

The electricity generator according to embodiments of the invention is therefore able to generate electricity in a clean manner utilising water pressure.

### Offset operation

For offset operation, there are provided first and second generators 10, each including the closure member 50. The first and second generators 10 can be coupled to the same or different control stations 46.

During a first time period, the respective control station controls the closure member 50 of the first generator 10 to be in the open configuration, and the respective control station controls the closure member 50 of the second generator 10 to be in the closed configuration, allowing water to enter the chamber 18 of the first generator 10 but not the chamber of the second generator. This causes the first generator to generate electricity, but the second generator does not generate electricity. The pump system of neither generator 10 is operated during the first time period. While the chamber 18 is filling with water, air can escape via the air conduit 48, reducing the rate of pressure increase in the chamber 18.

At the end of the first time period, which may for example be when the electrical power produced by the first generator has fallen below a threshold level, when the volume of water in the chamber of the first generator has reached a threshold value, and/or after a predetermined period of time, the respective control station controls the closure member 50 of the first generator 10 to move to the closed configuration, and the respective control station controls the closure member 50 of the second generator 10 to move to the open configuration. This configuration is maintained for a second time period, allowing water to enter the chamber 18 of the second generator 10 but not the chamber of the first generator. This causes the second generator to generate electricity, but the first generator does not generate electricity.

While the second generator generates electricity, the pump system 40 of the first generator is operated, for example using power generated by the second generator, to drain the chamber of the first generator.

At the end of the second time period, which may for example be when the electrical power produced by the second generator has fallen below a threshold level, when the volume of water in the chamber of the second generator has reached a threshold value, and/or after a predetermined period of time, the respective control station controls the closure member 50 of the second generator 10 to move to the closed configuration, and the respective control station controls the closure member 50 of the first generator 10 to move to the open configuration. This configuration is maintained for a third time period, allowing water to enter the chamber 18 of the first generator 10 but not the chamber of the second generator. This causes the first generator to generate electricity, but the second generator does not generate electricity.

While the first generator generates electricity, the pump system 40 of the second generator is operated, for example using power generated by the first generator, to drain the chamber of the second generator.

At the end of the third time period, which may for example be when the electrical power produced by the first generator has fallen below a threshold level, when the volume of water in the chamber of the first generator has reached a threshold value, and/or after a predetermined period of time, the respective control station controls the closure member 50 of the first generator 10 to move to the closed configuration, and the respective control station controls the closure member 50 of the second generator 10 to move to the open configuration and the second and third time periods are repeated.

In this way, the first and second generators operate in an offset manner, with one generating electricity while the other is being drained, thereby ensuring continuous generation of electrical power.

### Battery Operation

In battery operation, the control station 46 can operate the generator 10 to position the closure member 50 in the open configuration and thereby allow water to enter the chamber 18, generating electricity in the manner described above, during a first time period, for example, during a period of high electricity demand. During the first time period, the pump system 40 is not operated. Periods of high electricity demand can be during peak hours, such as during daytime hours, or during a period of high demand, such as for a few hours during daytime. The daytime may include but is not necessarily restricted to hours of daylight.

During the first time period, the chamber 18 fills with water because the pump system 40 is not being operated.

At the end of the first time period, the control station operates the closure member to move to a closed configuration, closing the first aperture.

During a second time period, for example during a period of low electricity demand, such as for example, at night time or for a few hours during the night, the control station 46 maintains the closure member 50 in a closed configuration thereby preventing water from entering the chamber 18. The pump system 40 is then operated using power which is generated by other power supplies, for example via a power line from the control station 46. This may for example be power which is being generated by other power supplies but which is excess to requirements during the second time period. For example, wind power generators can generate power all of the time. However, there is less demand for electricity at night. Accordingly, during the night, the power from wind power stations can be used to operate the pump system 40 to pump water from the chamber 18 to land.

Owing to the closure of the closure member 50, the chamber 18 is not refilled with water while the chamber 18 is being emptied. Instead, as the pump system 40 pumps water out of the chamber 18, the water is replaced with air flowing from the atmosphere via the air conduit 48 and in through the third aperture 24.

Once the chamber 18 is entirely or substantially drained of water, the pump system 40 is switched off. The generator 10 can then remain inactive until it is needed for electricity generation, for example until a period of high electricity demand, at which point the control station 46 can re-open the closure member 50 to allow electricity generation to begin again as described above.

In this way, the electricity generator can be used as a battery to effectively store energy until periods of high demand, at which point electricity can be generated to satisfy that high demand.

It is to be noted that the first and second time periods do not need to be adjacent in time. There can be intervening periods in which the closure member is closed and the pump system inactive.

The generator can be constructed in sections to make construction easier. Components such as resistors can be fitted once the relevant part of the generator in which they are to be installed has been made watertight. A tunnel can be provided from the generator to land for access and maintenance.

All optional and preferred features and modifications of the described embodiments and dependent claims are usable in all aspects of the invention taught herein. Furthermore, the individual features of the dependent claims, as well as all optional and preferred features and modifications of the described embodiments are combinable and interchangeable with one another.

The disclosures in United Kingdom patent application number 1421712.9, from which this application claims priority, and in the abstract accompanying this application are incorporated herein by reference.

## Claims

1. An electricity generator, including:
a housing for positioning underwater within a body of water, the housing enclosing a chamber in a watertight manner and including a first aperture for receiving an incoming jet of water due to a pressure of water outside the housing and a second aperture for coupling to a pump for removing water from the chamber; and
at least one turbine aligned with the first aperture to be turned by a jet of water through the first aperture;
wherein the generator is configured to generate electricity from the turning of the at least one turbine.

2. A generator according to claim 1, wherein the at least one turbine is a plurality of turbines.

3. A generator according to claim 2, wherein the plurality of turbines are in a line.

4. A generator according to any preceding claim, including a third aperture for coupling to an air conduit for introducing air into the chamber to replace water and/or air pumped out of the chamber via the second aperture and/or for allowing air to leave the chamber.

5. A generator according to any preceding claim, including at least one pump, preferably a plurality of pumps, coupled to the second aperture for pumping water out of the second aperture.

6. A generator according to claim 5, wherein the at least one pump is configured to pump water from the chamber to a location above a surface of a body of water in which the housing is located.

7. A generator according to any preceding claim, including a closure member for selectively closing or opening the first aperture.

8. A generator according to claim 7, wherein the closure member is operably coupled to a remote control unit for remotely closing or opening the first aperture.

9. A method of operating an electricity generator, the generator including:
a housing positioned underwater within a body of water, the housing enclosing a chamber in a watertight manner and including a first aperture for receiving an incoming jet of water due to a pressure of water outside the housing and a second aperture coupled to at least one pump for removing water from the chamber; and
at least one turbine aligned with the first aperture to be turned by an incoming jet of water through the first aperture; the method including:
allowing water to enter the chamber via the first aperture to turn the at least one turbine and thereby to generate electricity.

10. A method according to claim 9, including pumping water out of the chamber with the at least one pump.

11. A method according to claim 9 or 10, wherein the first aperture is operable to be selectively closed or opened, the method including opening the first aperture to cause electricity to be generated and closing the first aperture to stop the generation of electricity.

12. A method according to any of claims 9 to 11, including:
allowing water to enter the chamber via the first aperture to turn the at least one turbine and thereby to generate electricity during a first time period; and
pumping water out of the chamber with the at least one pump during a second time period;
wherein the first time period optionally includes a period of high electricity consumption by a region supplied by the generator, and the second time period optionally includes a period of low electricity consumption by a region supplied by the generator.

13. A method according to any of claims 9 to 12, including operating a second electricity generator, the second generator including:
a housing positioned underwater within a body of water, the housing enclosing a chamber in a watertight manner and including a first aperture for receiving an incoming jet of water due to a pressure of water outside the housing and a second aperture coupled to at least one pump for removing water from the chamber; and
at least one turbine aligned with the first aperture to be turned by an incoming jet of water through the first aperture; the method including in a first time period:
allowing water to enter the chamber of the first generator via the respective first aperture to turn the respective at least one turbine and thereby to generate electricity; and
pumping water out of the chamber of the second generator with the respective at least one pump; and in a second time period:
allowing water to enter the chamber of the second generator via the respective first aperture to turn the respective at least one turbine and thereby to generate electricity; and
pumping water out of the chamber of the first generator with the respective at least one pump.

14. A computer program for performing the method of any of claims 9 to 13 when executed on a computing device.

15. An electricity generator, including:
a housing including a first aperture for receiving an incoming jet of water;
a plurality of turbines aligned with the first aperture to be turned by an incoming jet of water through the first aperture; and
wherein the generator is configured to generate electricity from the turning of the at least one turbine.
